# NEUE EUROPÄISCHE PATENTSCHRIFT

(11) **EP 1 522 430 B2**
(45) Veröffentlichungstag und Bekanntmachung des Hinweises auf die Entscheidung über den Einspruch: **14.07.2010**
(45) Hinweis auf die Patenterteilung: 15.11.2006
(21) Anmeldenummer: 04018794.0
(22) Anmeldetag: 07.08.2004
(51) Int. Cl.: B60G 17/00, F04B 39/12, F04B 41/02, F04B 49/02

(54) **Verfahren und Anordnung zur Druckerhöhung von Gasen**
Method and device to increase the pressure of gases
Procede et appareil d'augmentation de la pression des gaz

(30) Priorität: 09.10.2003 DE 10347072
(43) Veröffentlichungstag der Anmeldung: 13.04.2005
(73) Patentinhaber: WABCO GmbH, 30453 Hannover (DE)
(72) Erfinder: Bodet, Marc, 30989 Northen (DE); Egeter, Klaus, 31628 Landesbergen (DE)
(74) Vertreter: Schrödter, Manfred

(56) Entgegenhaltungen:
- EP-A- 0 285 099
- EP-A- 0 631 051
- DE-A- 2 347 671
- DE-A1- 19 835 491
- JP-A- 06 297 928
- US-A- 3 736 003
- US-A- 3 874 692
- US-A- 5 004 265

## Beschreibung

Die Erfindung betrifft ein Verfahren und eine Anordnung zur Druckerhöhung von Gasen, insbesondere zur Niveauregulierung von Kraftfahrzeugen, gemäß dem Oberbegriff der Patentansprüche 1 und 7.

In vielen Gebieten der Technik werden Gase mit erhöhtem Druck, insbesondere Druckluft, benötigt. Beispiele aus dem Kraftfahrzeugbereich sind u. a. die Druckversorgung der Reifen (1-5 bar), der Bremsanlage bei druckluftgebremsten Fahrzeugen (ca. 10 bar) und die Druckluftversorgung von Luftfederbälgen (ca. 10-20 bar).

Zur Komprimierung der Gase bzw. der Druckluft sind Kompressoren unterschiedlicher Bauart bekannt. So werden z. B. Kolbenkompressoren, Schraubenkompressoren und Turbinen verwendet. Alle diese Bauarten haben ihre spezifischen Vor- und Nachteile.

Zur Erzielung besonders hoher Drücke von über 10 bar, beispielsweise von 20 bar oder 30 bar ist es technisch meist nicht sinnvoll, diese Druckerhöhung mit einem einzelnen Kompressor zu realisieren. Ein solcher Kompressor müßte nämlich besonders stabil ausgeführt sein, besonders gut abgedichtet sein, ein sehr kleines Totvolumen haben, und mit einem besonders starken Antrieb angetrieben sein. Dies würde zu einer nicht hinnehmbaren Kostenerhöhung eines derartigen Kompressors führen.

Weiter wird aus physikalischen Gründen bei jeder Druckerhöhung eines Gases eine beträchtliche Wärmemenge erzeugt, die zu einer unerwünschten Temperaturerhöhung des komprimierten Gases sowie des Kompressors führt. Das Gas und der Kompressor müssen deshalb abgekühlt werden. Die erwähnte Temperaturerhöhung tritt besonders stark bei einer einstufigen Druckerhöhung auf. Aus diesem Grund ist es gebräuchlich, Druckluft von besonders hohem Druck durch eine mehrstufige Kompression zu erzeugen.

Eine solche mehrstufige Kompression kann z. B. durch einen Kompressor mit mehreren Kolben erzeugt werden, die auf einer gemeinsamen Kolbenwelle sitzen und von einem gemeinsamen Antrieb angetrieben werden. Ein Beispiel hierfür ist die DE-C1 199 61 646. Hier wird ein schwingungsarmer, zweistufiger Tauchkolbenverdichter beschrieben, bei dem in mehreren Zylindern laufende Kolben von einer Kurbelwelle angetrieben werden und wobei zwei oder mehrere Niederdruckstufen und wenigstens eine Hochdruckstufe ausgebildet sind. Bei derartigen Kompressoren durchläuft die Druckluft zunächst die Niederdruckstufen und wird von diesen direkt zu den Hochdruckstufen weitergeleitet. Auf diese Weise läßt sich die gewünschte Druckerhöhung erzielen.

Notwendig ist die bereits oben angesprochene Kühlung der Druckluft bzw. des Kompressors, die hier durch Kühlrippen realisiert wird. Trotzdem sind derartige Kompressoren im Allgemeinen nicht für den Dauerbetrieb geeignet, sondern brauchen Betriebspausen zur Abkühlung.

Aus der DE-A1 100 03 869 ist weiter ein Verfahren zum Komprimieren von fluiden Fördermedien bekannt, wobei mindestens zwei getrennte Verdichtereinheiten vorgesehen sind, die von je einem eigenen Antriebsaggregat angetrieben werden. Durch eine spezielle Steuerung läßt sich hierbei ein guter Wirkungsgrad erreichen. Das zu verdichtende Medium durchläuft zunächst die erste Verdichtereinheit, dann einen Zwischenkühler zur Abkühlung des Mediums und anschließend eine zweite Verdichtereinheit. Durch die bekannte Anordnung läßt sich eine kontinuierliche Förderung des verdichteten Mediums erzielen.

Aus der EP 0285 099 A1 ist weiter eine Druckluftanlage zur Versorgung eines Luftfedersystems eines Fahrzeugs bekannt. Bei diesen sind die einzelnen Luftfedern direkt an einen Niederdruckspeicher zur Entlüftung bzw. Niveauabsenkung angeschlossen. Die im Niederdruckspeicher komprimierte Luft wird durch einen Kompressor in einen Hochdruckspeicher komprimiert. Falls das Niveau des Fahrzeugs angehoben werden soll, kann die im Hochdruckspeicher komprimierte Luft über Ventile den Luftfederbälgen zugeführt werden. Durch das bekannte geschlossene System ergibt sich insgesamt eine Energieeinsparung gegenüber einem offenen System. Dies ist insbesondere dadurch begründet, dass der Kompressor nicht gegen Atmosphärendruck fördern muss, sondern von einem Niederdruckspeicher in einen Hochdruckspeicher.

Aus der US-PS 5,004,265 ist weiter eine Fahrzeug-Niveauregulierung bekannt, welche eine Pumpe mit variabler Förderleistung aufweist. Die Pumpe fördert von Atmosphärendruck in einen Druckspeicher. Falls das Niveau angehoben werden soll, wird der Druckspeicher an Druckelemente weitergeleitet. Zum Absenken wird der Druck aus den Druckelementen in einen Ölsumpf zurückgeleitet.

Nachteilig an den bekannten Kompressoren bzw. Verfahren zur mehrstufigen Verdichtung ist, daß mehrere Kompressor-Einheiten oder ein mehrstufiger Kompressor sowie deren Antriebe benötigt werden. Weiterhin werden Mittel zur Abkühlung des verdichteten Mediums benötigt. Dies führt zu einer Verteuerung der Anlage.

Die Druckschrift US3874692 offenbart ein Luftfederungssystem für Kraftfahrzeuge mit einem Kompressor, einem Niederdruckspeicher, einem Hochdruckspeicher, einer Luftfeder, Magnetventilen und einer elektrischen Schaltung zur Ansteuerung der Magnetventile und des Kompressors. Die Luftfeder wird bei Bedarf über ein zu schaltendes Magnetventil mit dem Hochdruckspeicher verbunden, so dass das Niveau des Kraftfahrzeuges erhöht werden kann. Um das Niveau des Kraftfahrzeuges abzusenken, kann die Luftfeder über ein zu schaltendes Magnetventil mit dem Niederdruckspeicher verbunden werden. Ist der Druck in dem Hochdruckspeicher unterhalb eines bestimmten Wertes gefallen, was durch einen ersten Druckschalter festgestellt wird, dann wird mittels des Kompressors Luft aus dem Niederdruckspeicher in den Hochdruckspeicher überführt. Tritt in der Luftfederungsanlage eine Leckage auf und der zweite Druckschalter des Niederdruckspeichers erkennt, dass der Druck in dem Niederdruckspeicher unter einen bestimmten Wert gefallen ist, dann werden die kompressorseitigen Magnetventile der beiden Speicher derart geschaltet, dass der Kompressor Luft aus der Atmosphäre ansaugt und in den Niederdruckspeicher verdichtet, bis ein bestimmter Differenzdruck zum Hochdruckspeicher erreicht ist. Der maximale Enddruck des Hochdruckspeichers liegt im Bereich von 10kp/cm², was in etwa 9,81 bar entspricht. Der Erfindung liegt die Aufgabe zugrunde, ein Verfahren und eine Anordnung zur Verdichtung eines Druckmediums, insbesondere Druckluft anzugeben, das mit nur einem einzigen Kompressor auskommt und trotzdem in der Lage ist, die Druckluft auch in höhere Bereiche, beispielsweise von 20-30 bar, zu verdichten. Weiterhin besteht die Aufgabe darin, die Anlage möglichst kostengünstig zu gestalten.

Diese Aufgabe wird durch die in den Patentansprüchen 1 und 7 enthaltene Erfindung gelöst. Die Unteransprüche enthalten zweckmäßige Weiterbildungen.

Durch die Anwendung der Erfindung ist es möglich, mit nur einem einzigen, weitgehend handelsüblichen Kompressor eine Druckerhöhung bis in einen Bereich von 20-30 bar zu erzielen. Weiter sind besondere Kühleinrichtungen zur Zwischenkühlung der Druckluft nicht erforderlich.

Durch die erfindungsgemäße Kompression in mehreren zeitlich getrennten Phasen bzw. Stufen kann es zwar länger dauern, bis der gewünschte Enddruck erreicht wird. Dies ist aber bei vielen Anwendungsfällen, insbesondere bei Druckluftversorgungen von Niveauregulierungsanlagen in Kraftfahrzeugen, kein wesentlicher Nachteil. Außerdem ergibt sich durch die mehrstufige Druckerhöhung mit jeweils nur geringer Druckstufung auch nur eine geringe Temperaturerhöhung des Druckmittels in den einzelnen Stufen.

Die Erfindung wird im Folgenden anhand einer Zeichnung näher erläutert.

In dieser sind schematisch in
- Fig. 1: das Grundprinzip des erfindungsgemäßen Verfahrens, in
- Fig. 2: ein erstes Ausführungsbeispiel mit zwei Speichern (offenes System) für eine Niveauregulierungsanlage eines Kraftfahrzeuges, in
- Fig. 3: ein zweites Ausführungsbeispiel mit drei Speichern (offenes System) für eine Niveauregulierungsanlage eines Kraftfahrzeuges, und in
- Fig. 4: ein drittes Ausführungsbeispiel mit zwei Speichern (geschlossenes System) für eine Niveauregulierungsanlage eines Kraftfahrzeuges
dargestellt.

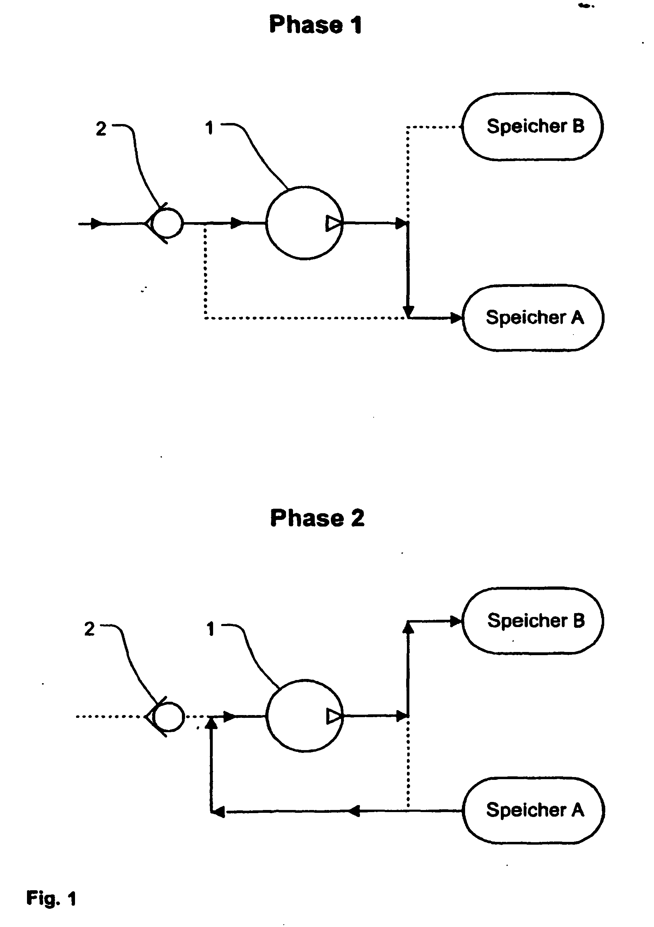

Die Fig. 1 dient zur Erläuterung des Grundprinzips des erfindungsgemäßen Verfahrens. In einer ersten Phase 1 wird mittels eines Kompressors (1) über ein Rückschlagventil (2) das zu verdichtende Medium, beispielsweise Druckluft, angesaugt und in einen ersten Speicher (A) verdichtet. Nach einer vorbestimmten Laufzeit des Kompressors (1) oder nach Erreichen eines vorbestimmten Druckes im Speicher (A) werden in der Fig. 1 nicht dargestellte Ventile umgeschaltet, sodaß sich die Anordnung gemäss der Phase 2 ergibt. In dieser zweiten Phase wird die bereits vorverdichtete Druckluft aus dem Speicher (A) zum Eingang des Kompressors (1) zurückgeleitet und in einen zweiten Speicher (B) komprimiert. Diese zweite Phase wird wiederum beendet nach einer bestimmten Laufzeit des Kompressors (1) oder nach Erreichen eines vorbestimmten Druckes im Speicher (B) .

Wie man erkennt, ist in beiden Phasen 1 und 2 der Förderdruck des Kompressors (1) bzw. der Differenzdruck zwischen Eingang und Ausgang des Kompressors (1) etwa gleich. Dies hat den Vorteil, daß auch der (nicht gezeichnete) Antrieb des Kompressors (1) in beiden Phasen etwa gleichmäßig beansprucht wird und somit nicht für besonders hohe Belastungen ausgelegt sein muß. Dasselbe gilt für die mechanischen Teile des Kompressors (1).

Ein weiterer Vorteil gegenüber dem Stand der Technik liegt darin, daß wie bereits erwähnt, ein besonderer Zwischenkühler für die vorverdichtete Druckluft entfallen kann. Diese Zwischenkühlung wird vielmehr durch den ersten Speicher (A) geleistet.

Gemäß einer Variante der Erfindung kann zweckmäßig in einer dritten Phase die Druckluft durch denselben Kompressor (1) durch eine entsprechende Umschaltung von Ventilen aus dem zweiten Speicher (B) in einen dritten Speicher (in Fig. 1 nicht dargestellt) verdichtet werden.

Es können grundsätzlich beliebig viele Speicher bzw. Phasen zeitlich hintereinander geschaltet werden. Hierdurch lassen sich mit nur einem handelsüblichen Kompressor, der allenfalls eine verstärkte Abdichtung des Kolbens haben muß, auch hohe Enddrücke erzielen.

Gemäß einer weiteren Variante der Erfindung kann zweckmäßig in der ersten Phase das zu komprimierende Druckmittel auch gleichzeitig in beide bzw. alle Speicher (A, B) komprimiert werden. In der zweiten Phase wird dann das vorkomprimierte Druckmittel aus dem Speicher (A) in den bereits mit gleichem Druck gefüllten Speicher (B) gefördert und dort weiter komprimiert.

Diese Variante hat den Vorteil, daß das Druckmittel im zweiten Speicher (B) früher zur Verfügung steht.

Zweckmäßig ist weiter, daß die Speicher (A, B) unterschiedliche Volumen und Druckfestigkeiten aufweisen. So kann in der Fig. 1 der Speicher (A) ein größeres Volumen als der Speicher (B) aufweisen, wobei aber der Speicher (B) eine höhere Druckfestigkeit als der Speicher (A) hat. Durch diese Differenzierung der einzelnen Speicher läßt sich insbesondere der Platzbedarf für die verschiedenen Speicher verringern.

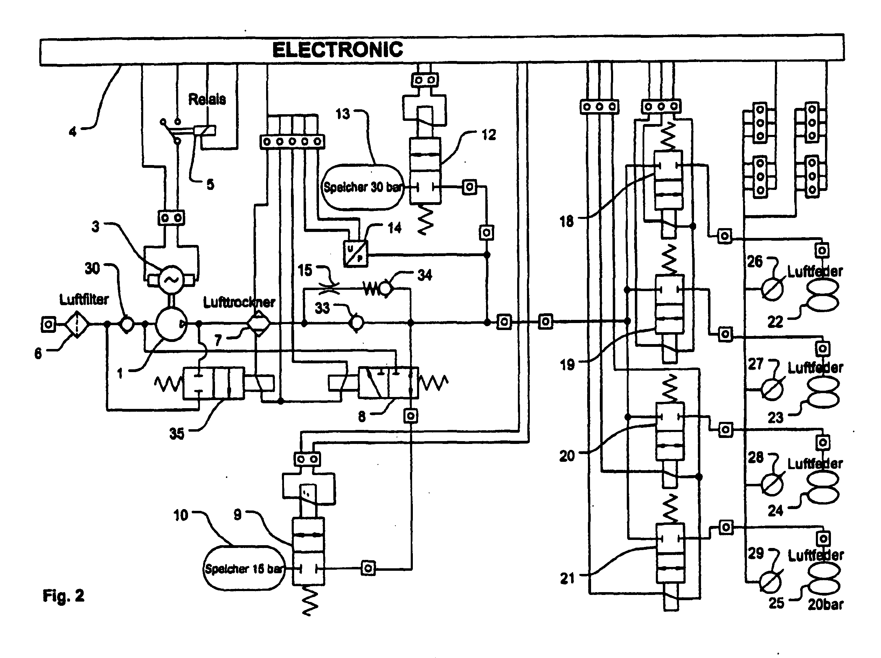

In der Fig. 2 ist ein Ausführungsbeispiel des erfindungsgemäßen Verfahrens näher dargestellt, welches hier zur Druckerzeugung für eine Niveauregulierungsanlage in einem Kraftfahrzeug verwendet wird.

Der gemeinsame Kompressor (1) wird durch einen Elektromotor (3) angetrieben. Dieser wird von einer Steuerelektronik (4) über ein Relais (5) angesteuert. Der Kompressor (1) saugt das zu verdichtende Medium, hier Luft, über einen Luftfilter (6) sowie ein Rückschlagventil (30) an. Über einen Lufttrockner (7) und ein weiteres Rückschlagventil (33) gelangt die Druckluft zunächst über ein geöffnetes Magnetventil (8) sowie ein ebenfalls geöffnetes Magnetventil (9) zu einem ersten Speicher (10). Dieser ist auf einen Druck von 15 bar ausgelegt. Sobald der Speicher (10) gefüllt ist, was in der Praxis bei einem Speichervolumen von 3 Litern etwa 3 Minuten dauern kann, wird das Magnetventil (8) umgeschaltet, sodaß der Speicher (10) jetzt am Eingang des Kompressors (1) anliegt. Damit ist die erste Druckerhöhungsphase beendet.

In der zweiten Phase fördert der Kompressor (1) das bereits vorverdichtete Druckmittel aus dem ersten Speicher (10) über das geöffnete Magnetventil (9), das umgeschaltete Magnetventil (8), den Lufttrockner (7), das Rückschlagventil (33), und das geöffnete Magnetventil (12) in einen zweiten Speicher (13). Dieser ist für einen Enddruck von 30 bar ausgelegt. Diese zweite Druckerhöhungsphase kann beispielsweise bei einem Speichervolumen von 2 Litern des zweiten Speichers (13) etwa 4 Minuten dauern.

Sobald der zweite Speicher (13) gefüllt ist, kann dieser zur Versorgung einer Niveauregulierungsanlage (18 bis 29) eines Kraftfahrzeugs verwendet werden. Die Ausgangsdrücke der Speicher (10, 13) lassen sich durch einen Drucksensor (14) nacheinander überwachen.

Der im Speicher (13) zur Verfügung stehende Druck von etwa 30 bar kann bei Bedarf über Magnetventile (18 bis 21) zugehörigen Luftfedern (22 bis 25) des Kraftfahrzeugs zugeleitet werden. Die Luftfedern bzw. Gummibälge sind den Rädern des Fahrzeugs zugeordnet. Durch die Belüftung oder Entlüftung der Gummibälge kann in bekannter Weise das Niveau bzw. die Bodenfreiheit des Fahrzeugs erhöht oder verringert werden. Die jeweilige Höhe der Luftfedern (22 bis 25) wird durch Wegsensoren (26 bis 29) überwacht und der Elektronik (4) zurückgemeldet. Alle elektrischen Anschlüsse der Magnetventile (18 bis 21) sowie der Wegsensoren (26 bis 29) sind über (nicht bezifferte) Steckverbindungen an die Elektronik (4) angeschlossen.

Falls das Fahrzeug-Niveau durch Entlüften einer oder mehrerer der Luftfedern (22 bis 25) gesenkt werden soll, werden die normalerweise auf Halten geschalteten Magnetventile (18 bis 21) auf Durchgang geschaltet, wobei gleichzeitig die Magnetventile (9, 12) der beiden Speicher (10, 13) auf Sperrung geschaltet sein müssen. Die überschüssige Druckluft kann dann über ein Rückschlagventil (34), eine Drossel (15), den Lufttrockner (7), ein geöffnetes Magnetventil (35) sowie den Luftfilter (6) ins Freie entweichen (offenes System). Hierbei wird zusätzlich der Lufttrockner (7) regeneriert.

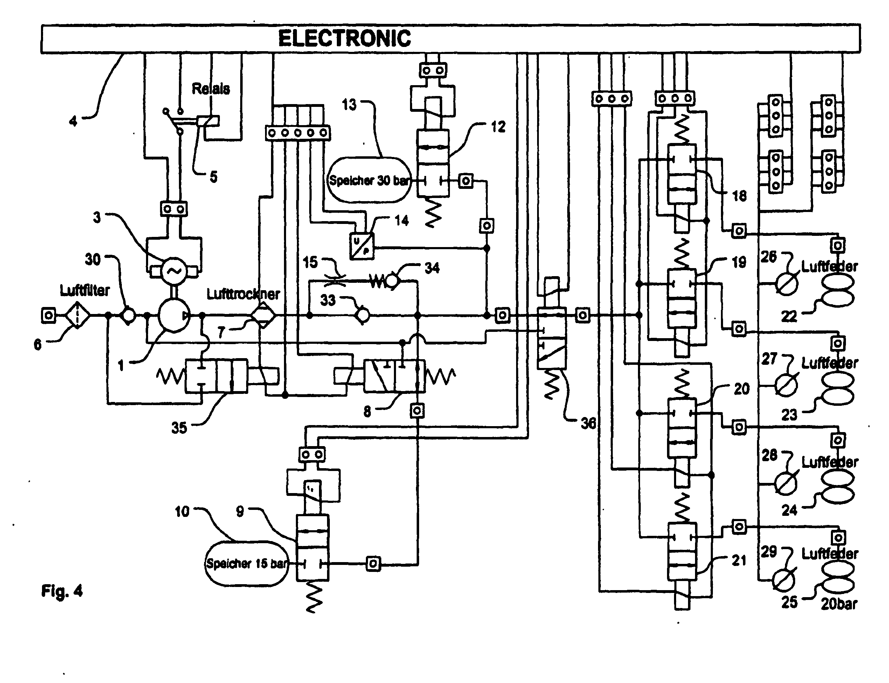

Das erfindungsgemäße Verfahren kann aber auch in geschlossenen Systemen angewendet werden (siehe Fig. 4).

Die für die verschiedenen Phasen des erfindungsgemäßen Verfahrens, nämlich die erste Druckerhöhungsphase, die zweite Druckerhöhungsphase, die Druckerhöhung in einzelnen Luftfederbälgen, das Druckhalten in den Luftfederbälgen, sowie die Druckabsenkung in einzelnen Luftfederbälgen nötige Steuerung der verschiedenen Magnetventile wird durch die Elektronik (4) anhand eines eingeschriebenen Steuerprogramms übernommen. Zur Überwachung dienen dabei der bereits genannte Drucksensor (14) sowie die Signale der Wegsensoren (26) bis (29). Außerdem können zeitliche Vorgaben bzw. Grenzzeiten für die verschiedenen Vorgänge in der Elektronik (4) gespeichert sein.

Der prinzipielle Aufbau derartiger Niveauregulierungen mit Steuerelektronik ist dem Fachmann bekannt und wird deshalb hier nicht näher erläutert (siehe z.B. den Prospekt WABCO-ECAS- elektronische Niveauregulierung für Personen- und leichte Nutzkraftwagen, 08/2000). Die Elektroniken selbst sind mittels entsprechend programmierter Mikrokontroller realisiert.

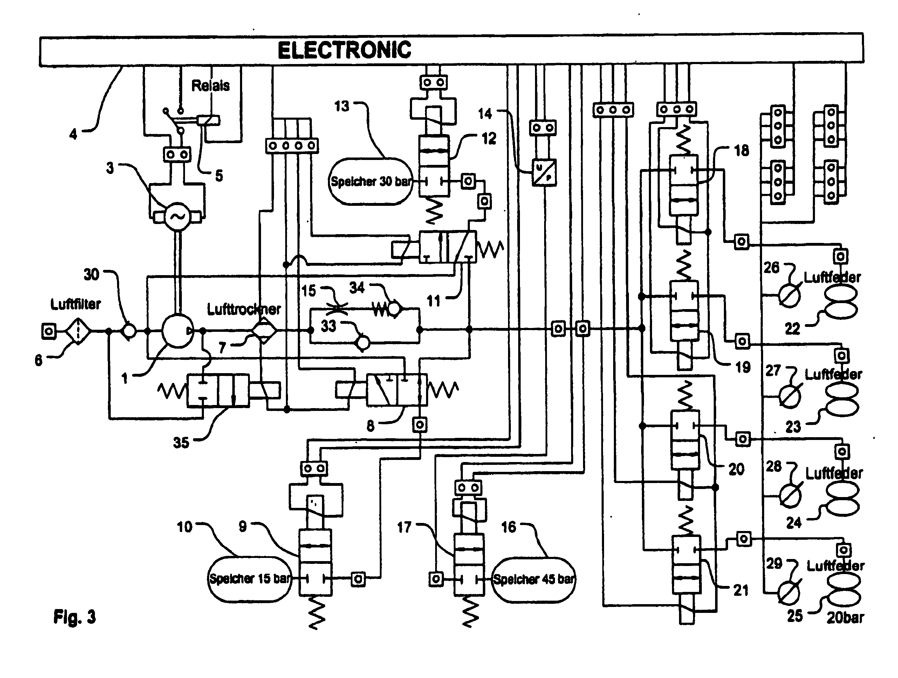

Die Fig. 3 unterscheidet sich von der Fig. 2 im wesentlichen nur dadurch, daß hier noch ein dritter Speicher (16) mit zugehörigem Magnetventil (17) vorgesehen ist. Der dritte Speicher (16) ist für einen Enddruck von 45 bar ausgelegt. Außerdem ist ein weiteres Magnetventil (11) vorgesehen, durch welches der zweite Speicher (13) an den Eingang des Kompressors (1) gelegt werden kann. Im übrigen gleicht die Ausführung der Fig. 3 der der Fig. 2.

Sobald der zweite Speicher (13) nach der zweiten Druckerhöhungsphase gefüllt ist, wird dieser über das Magnetventil (11) an den Eingang des gemeinsamen Kompressors (1) gelegt. Dieser fördert sodann in einer dritten Phase den Inhalt des Speichers (13) unter weiterer Kompression in den dritten Speicher (16), wobei das Magnetventil (17) geöffnet sein muß. Nach Beendigung dieser dritten Phase wird das Magnetventil (12) geschlossen, und der Druck des dritten Speichers (16) steht nun am Drucksensor (14) zur Versorgung der bereits beschriebenen Niveauregulierungsanlage (18 bis 29) zur Verfügung.

Wie bereits erwähnt, sind die drei Speicher (10, 13, 16) zweckmäßig von unterschiedlicher Größe, wobei der Speicher (10) volumenmäßig am größten und der Speicher (16) am kleinsten ausgelegt sein kann. Dafür muß der Speicher (16) für den höchsten Speicherdruck ausgelegt sein.

Durch die Versorgung der Luftfedern (22) bis (25) aus dem Hochdruckspeicher (16) ergibt sich der Vorteil einer schnelleren Füllung. Hierdurch werden vorteilhaft die Regelzeiten der Niveauregulierung verringert.

Die Figuren 2 und 3 zeigen offene Druckluftsysteme, das heißt, daß nach der Verwendung der Druckluft zum Anheben oder Halten der Luftfedern (22 bis 25) diese beim Absenken der Luftfedern ins Freie abgelassen wird. Dies geschieht, wie bereits erwähnt, über das Rückschlagventil (34), die Drossel (15), den Lufttrockner (7), das Magnetventil (14) und den Luftfilter (6).

Will man das erfindungsgemäße Verfahren dagegen bei einem geschlossenen System anwenden, dann wird, wie in der Fig. 4 dargestellt, in die Ausgangsleitung zu den Luftfedern (22 bis 25) ein weiteres Magnetventil (36) eingefügt. Dieses ist in der (gezeichneten) Grundstellung zum Belüften oder Halten der Luftfedern (22 bis 25) von der Elektronik (4) auf Durchgang geschaltet.

Zum Entlüften der Luftfedern (22 bis 25) wird das Magnetventil (36) in die obere Stellung umgeschaltet. Damit liegt der Entlüftungsanschluß des Ventils (36) an den Luftfedern (22 bis 25). Hierdurch gelangt die abgelassene Druckluft wieder zum Eingang des Kompressors (1). Nach erneuter Verdichtung gelangt die Druckluft zurück in den ersten Speicher (10). Hierzu muß natürlich auch das Magnetventil (9) geöffnet werden. Anschließend wird der Druck durch Komprimierung in den zweiten Speicher (13) wie oben beschrieben wieder erhöht.

Das beschriebene geschlossene System hat den Vorteil, daß der Restdruck der abgelassenen Druckluft nicht ins Freie verpufft, sondern wieder genutzt werden kann. Hierdurch ist der Energieverbrauch der Anlage bzw. die vom elektrischen Antriebsmotor (3) verbrauchte elektrische Energie vemindert.

Eine Anordnung zur Durchführung des Verfahrens nach Anspruch 1 besteht zweckmäßig aus einem gemeinsamen Kompressor (1), zwei oder mehreren Speichern (A,B,10, 13,16), mindestens einem Drucksensor (14), mindestens zwei Magnetventilen (8,11) zum wechselseitigen Anschluß der Speicher (A,B,10,13,16) an den Kompressor (1), sowie einer entsprechend programmierten Steuerelektronik (4) zur zeitlichen Steuerung des Antriebmotors (3) des Kompressors (1) und von Magnetventilen (8,9,11,12,35,17,36).

## Patentansprüche

1. Verfahren zur Druckerhöhung eines Gases, insbesondere für die Versorgung einer Niveauregulierung eines Kraftfahrzeugs, wobei in einer ersten Phase das Gas mittels eines Kompressors (1) in einen ersten Speicher (A, 10) komprimiert wird, und in einer zweiten Phase das Gas mittels desselben Kompressors (1) von dem ersten Speicher (A, 10) in einen zweiten Speicher (B, 13) komprimiert wird, **dadurch gekennzeichnet, daß** sowohl der Druck in dem ersten Speicher (A, 10) als auch der Druck in dem zweiten Speicher (B, 13) von ein und demselben Drucksensor (14) überwacht wird.

2. Verfahren nach Anspruch 1, **dadurch gekennzeichnet, daß** in einer dritten Phase das Gas durch denselben Kompressor (1) in einen dritten Speicher (16) komprimiert wird.

3. Verfahren nach einem oder beiden der Ansprüche 1 bis 2, **dadurch gekennzeichnet, daß** in der ersten Phase das Gas gleichzeitig in alle Speicher (A, B, 10, 13, 16) komprimiert wird.

4. Verfahren nach einem oder mehreren der Ansprüche 1 bis 3, **dadurch gekennzeichnet, daß** die Speicher (A, B, 10, 13, 16) unterschiedliche Volumen und Druckfestigkeiten aufweisen.

5. Verfahren nach einem oder mehreren der Ansprüche 1 bis 4, **dadurch gekennzeichnet, daß** für ein offenes System das aus einem Verbraucher (Luftfedern (22 bis 25)) abgelassene Gas über ein Rückschlagventil (34), eine Drossel (15), einen Lufttrockner (7), ein Magnetventil (35), und einen Luftfilter (6) ins Freie abgelassen wird.

6. Verfahren nach einem oder mehreren der Ansprüche 1 bis 4, **dadurch gekennzeichnet, daß** für ein geschlossenes System mittels eines weiteren Magnetventils (36) das aus einem Verbraucher (Luftfedern (22 bis 25)) abgelassene Gas zurück in den ersten Speicher (A, 10) befördert wird.

7. Anordnung zur Durchführung des Verfahrens nach Anspruch 1, mit einem gemeinsamen Kompressor (1), zwei oder mehrere Speicher (A, B, 10, 13, 16), mindestens zwei Magnetventile (8, 11) zum wechselseitigen Anschluß der Speicher (A,B, 10,13,16) an den Kompressor (1), sowie eine entsprechend programmierte Steuerelektronik (4) zur zeitlichen Steuerung eines Elektromotors (3) für den Kompressor (1) und von Magnetventilen (8, 9, 11, 12, 17, 35, 36), **gekennzeichnet durch** einen einzigen Drucksensor (14).

## Claims

1. Method for increasing the pressure of a gas, especially for supplying a levelling system in a motor vehicle, wherein in a first phase the gas is compressed into a first storage tank (A, 10) by means of a compressor (1), and in a second phase the gas is compressed by the same compressor (1) from the first storage tank (A, 10) into a second storage tank (B, 13), **characterised in that** both the pressure in the first storage tank (A, 10) and the pressure in the second storage tank (B, 13) are monitored by one and the same pressure sensor (14).

2. Method according to claim 1, **characterised in that** in a third phase the gas is compressed by the same compressor (1) into a third storage tank (16).

3. Method according to one or both of claims 1 and 2, **characterised in that** in the first phase the gas is compressed simultaneously into all the storage tanks (A, B, 10, 13, 16).

4. Method according to one or more of claims 1 to 3, **characterised in that** the storage tanks (A, B, 10, 13, 16) have different volumes and pressure ratings.

5. Method according to one or more of claims 1 to 4, **characterised in that** for an open system the gas released from a consumer unit (air springs (22 to 25)) is released to the ambient air by way of a check valve (34), a throttle (15), an air drier (7), a solenoid valve (35) and an air filter (6).

6. Method according to one of more of claims 1 to 4, **characterised in that** for a closed system the gas released from a consumer unit (air springs (22 to 25)) is conveyed back into the first storage tank (A, 10) by means of a further solenoid valve (36).

7. Arrangement for implementing the method according to claim 1, having a common compressor (1), two or more storage tanks (A, B, 10, 13, 16), at least two solenoid valves (8, 11) for the alternate connection of the storage tanks (A, B, 10, 13, 16) to the compressor (1), and suitably programmed control electronics (4) for time control of an electrical motor (3) for the compressor (1) and solenoid valves (8, 9, 11, 12, 17, 35, 36), **characterised by** a single pressure sensor (14).

## Revendications

1. Procédé pour augmenter la pression d'un gaz, en particulier pour l'alimentation d'une régulation de niveau d'un véhicule automobile, dans lequel dans une première phase, le gaz est comprimé au moyen d'un compresseur (1) dans un premier accumulateur (A, 10), et dans une deuxième phase, le gaz est comprimé au moyen du même compresseur (1) depuis le premier accumulateur (A, 10) jusque dans un deuxième accumulateur (B, 13), **caractérisé en ce que** non seulement la pression dans le premier accumulateur (A,10) mais aussi la pression dans le deuxième accumulateur (B,13) est surveillée par le même capteur de pression (14).

2. Procédé selon la revendication 1, **caractérisé en ce que** dans une troisième phase, le gaz est comprimé par le même compresseur (1) dans un troisième accumulateur (16).

3. Procédé selon l'une ou les deux revendications 1 à 2, **caractérisé en ce que** dans la première phase, le gaz est comprimé simultanément dans tous les accumulateurs (A, B, 10, 13, 16).

4. Procédé selon l'une ou plusieurs des revendications 1 à 3, **caractérisé en ce que** les accumulateurs (A, B. 10, 13, 16) présentent différents volumes et différentes résistances à la pression.

5. Procédé selon l'une ou plusieurs des revendications 1 à 4, **caractérisé en ce que** pour un système ouvert, le gaz s'échappant hors d'un appareil consommateur (ressort pneumatique (22 à 25)) s'échappe vers l'air libre via un clapet antiretour (34), un étranglement (15), un séchoir à air (7), une électrovanne (35) et un filtre à air (6).

6. Procédé selon l'une ou plusieurs des revendications 1 à 4, **caractérisé en ce que** pour un système fermé, le gaz s'échappant hors d'un appareil consommateur (ressort pneumatique (22 à 25)), est refoulé dans le premier accumulateur (A, 10) au moyen d'une deuxième électrovanne (36).

7. Agencement pour mettre en oeuvre le procédé selon la revendication 1 avec un compresseur (1) commun, deux ou plusieurs accumulateurs (A, B, 10, 13, 16), au moins deux vannes électromagnétiques (8, 11) pour raccorder en alternance les accumulateurs (A, B, 10, 13, 16) au compresseur (1), ainsi qu'avec un système électronique de commande (4) programmé de manière correspondante pour commander dans le temps un moteur électrique (3) pour le compresseur (1) et des électrovannes (8, 9, 11, 12, 17, 35, 36) **caractérisé par** un capteur de pression (14) unique.
